# EUROPEAN PATENT SPECIFICATION

(11) **EP 1 029 281 B1**
(45) Date of publication and mention of the grant of the patent: **28.01.2004**
(21) Application number: 98955243.5
(22) Date of filing: 04.11.1998
(51) Int. Cl.: G06F 12/08

(54) **A DIRECTORY-BASED CACHE COHERENCY SYSTEM**
AUF VERZEICHNIS BASIERENDES CACHE-SPEICHER-KOHÄRENZ-SYSTEM
SYSTEME DE COHERENCE ANTEMEMOIRES A BASE DE REPERTOIRE

(30) Priority: 05.11.1997 US 965004
(43) Date of publication of application: 23.08.2000
(73) Proprietor: UNISYS CORPORATION, Blue Bell, PA 19424-0001 (US)
(72) Inventor: CHURCH, Craig, R., Wayne, PA 19087 (US); BAUMAN, Mitchell, A., Circle Pines, MN 55014 (US); SCHIBINGER, Joseph, S., Phoenixville, PA 19460 (US); MORRISSEY, Douglas, E., Allentown, PA 18104 (US)
(74) Representative: Modiano, Guido, Dr.-Ing.
(86) International application number: PCT/US1998/023505
(87) International publication number: WO 1999/023565

(56) References cited:
- WO-A-95/25306
- US-A- 5 537 569
- US-A- 5 568 633
- US-A- 5 581 725
- "COMPACT GLOBAL TABLE FOR MANAGEMENT OF MULTIPLE CACHES" IBM TECHNICAL DISCLOSURE BULLETIN, vol. 32, no. 7, 1 December 1989, pages 322-324, XP000078115

## Description

### Background of the Invention

### Field of the Invention

The present invention relates generally to caching systems, and more specifically, to maintaining coherency in a directory-based cache system.

### Related Art

A multiprocessor system typically includes a main memory that is shared by a number of processors, each having its own cache system. A cache is generally a buffer between a host processor and main memory. The cache is a small, fast memory, located close to the host processor, that stores a set of the most recently accessed instructions or data. The cache increases system performance by storing information which the host processor requires frequently. Storing information in the cache increases system performance by avoiding long delays associated with access to main memory. Each cache system may include multiple levels of caches.

The multiprocessor system enables data to be shared by multiple processors simultaneously. For example, a multiprocessor system with two processors, A and B, allows both processors to store a copy of data. D, in their respective caches simultaneously. The multiprocessor system, however, introduces a problem of cache coherency. The cache coherency problem arises when processor A modifies its copy of D, while B simultaneously, uses its copy of D. Once A modifies its copy of D, the copy of D held in B's cache is no longer valid. This situation is incoherent because if processor B were to read D from its cache, the wrong value of D will be returned. Cache coherency can be achieved by ensuring that B cannot use its copy of D until it is made equal to the modified copy held in A's cache or alternatively, by ensuring that A cannot modify its copy of D until B's copy is returned or invalidated.

One way to ensure cache coherency is with a directory protocol. The directory protocol ensures the coherency of all caches within the system by acting as a reference for the operations that the processor may perform on a particular cache line. The cache line represents the smallest unit of data transferred between the memory and the cache. Before being allowed to modify the cache line, the processor must have certain access rights to the cache line. This access may be of different types (e.g., access to read the cache line or access to modify the cache line), and is referred to generally as ownership. In a simple two processor system, for example, ownership of the cache line is granted through a messaging system, wherein processor A requests a particular level of ownership (e.g. read or write/modify) of the cache line presently owned by processor B. In this example, to grant ownership, processor B responds to processor A's request message.

Another of the problems associated with multiple levels of caches has to do with inclusivity. Typically, caches are inclusive caches. An inclusive cache includes, as cache lines, copies of each of the caches lines in each of the lower level caches that are associated with the cache. For example, cache A is coupled to two lower level caches B₁ and B₂. Each of caches B₁ and B₂ are in turn coupled to two lower level caches C₁₁ and C₁₂, and C₂₁ and C₂₂, respectively. In this example, B₁ for instance, as an inclusive cache, includes copies of cache lines for each cache line in C₁₁ and C₁₂. Likewise, B₂ includes copies of cache lines for each cache line in C₂₁ and C₂₂. The problem is further exacerbated in cache A because cache A includes copies of cache lines for each cache line in B₁ and B₂, which include copies of the cache lines in C₁₁, C₁₂, C₂₁, and C₂₂. As higher level caches are used, the benefits of having a small, fast memory are lost.

WO-A-95/25306 discloses a memory hierarchy system with a third level directory performing consistency actions on a second level cache miss.

What is needed is a system and method for implementing a higher level coherent cache that overcomes the problems of conventional caches.

### Summary of the Invention

The present invention provides a memory hierarchy system as set out in claim 1.

Further features and advantages of the present invention, as well as the structure and operation of various embodiments of the present invention, are described in detail below with reference to the accompanying drawings.

### Brief Description of the Drawings

The present invention is described with reference to the accompanying drawings. In the drawings, like reference numbers indicate identical or functionally similar elements. Additionally, the left-most digit(s) of a reference number identifies the drawing in which the reference number first appears.
FIG. 1 is a block diagram of a system platform according to a preferred embodiment of the present invention.
FIG. 2 is a block diagram of a processing module according to one embodiment of the present invention.
FIG. 3 is a block diagram of an I/O module according to one embodiment of the present invention.
FIG. 4 is a block diagram of a sub-processing module according to one embodiment of the present invention.
FIG. 5 is a block diagram of a sub-processing module according to a preferred embodiment of the present invention.
FIG. 6 is a block diagram of a memory storage unit according to one embodiment of the present invention.
FIG. 7 illustrates a directory-based protocol for maintaining coherency for a memory unit and for all levels of caches according to one embodiment of the present invention.
FIG. 8 illustrates a directory-based protocol for maintaining coherency for a memory unit and for a third-level cache and a MESI-based protocol for maintaining coherency for a second level cache according to a preferred embodiment of the present invention.
FIG. 9 illustrates a coherent system according to a preferred embodiment of the present invention.

### Detailed Description of the Embodiments

### Overview

The present invention is directed to a system and method for maintaining coherency in a directory-based caching system. In particular, embodiments of the present invention maintain coherency and consistency models for various processors (e.g., A-Series (Capricorn), 2200 (Voyager), and UNIX/NT (TITAN) systems). The present invention provides for multiple processors and multiple memory units. The present invention operates in a symmetrical processing environment.

### System Platform

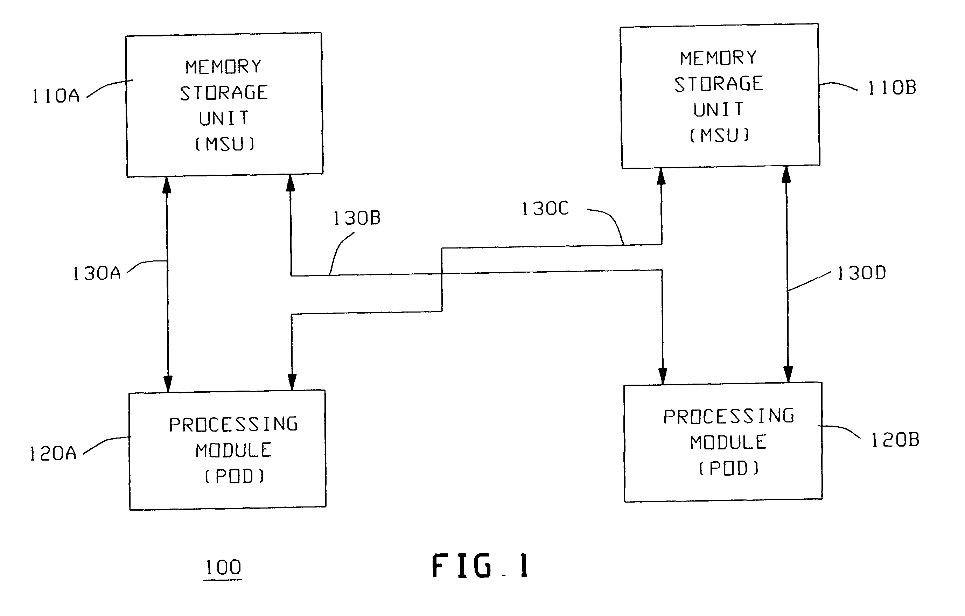

FIG. 1 illustrates a system platform 100 useful for managing data flow among multiple processing systems and multiple memory storage systems. System platform 100 includes one or more memory storage units (MSU) 110 (shown as MSU 110A and MSU 110B) and one or more processing modules (POD) 120 (shown as POD 120A and POD 120B). Each MSU 110 is interfaced to each POD 120 via a dedicated, or point-to-point, bus referred to as an MSU interface (MI) bus 130 (shown as MI bus 130A, MI bus 130B, MI bus 130C and MI bus 130D).

In one embodiment of the present invention, MI bus 130 is comprised of a unidirectional control bus, a bi-directional request bus, and a bi-directional data bus (not individually shown). The request bus runs at system clock frequency (SYSCLK) while the data bus runs source synchronous at two times the system clock frequency (2x SYSCLK). In a preferred embodiment of the present invention, the system clock frequency is 100 megahertz (MHZ).

POD 120 has direct access to data in any MSU 110 via one of MI bus 130. For example, MI bus 130A allows POD 120A direct access to MSU 110A and MI bus 130C allows POD 120A direct access to MSU 110B. POD 120 and MSU 110 are discussed in further detail below.

### Memory Storage Unit

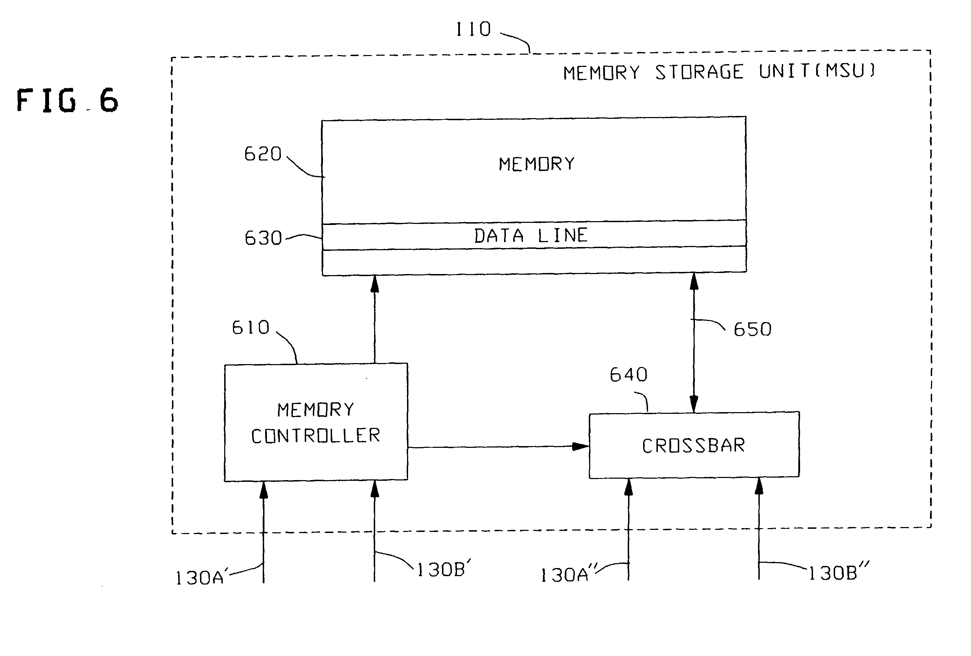

FIG. 6 illustrates memory storage unit (MSU) 110 in further detail. MSU 110 includes a memory controller 610, a memory 620, and a crossbar 640. Memory 620 includes a plurality of data lines (represented by data line 630). Each data line 630 includes one or more addressable data storage locations for storing data and associated directory information that maintains the ownership status of the data line. Data line 630 is the smallest quantum of data transferred among MSUs 110 and PODs 120 in system platform 100. In a preferred embodiment of the present invention, data line 630 is comprised of 8 data words (or 64 bytes).

Memory controller 610 operates as the memory manager of memory 620. Memory controller 610 receives the control and address lines of MI bus 130 from POD 120 (shown as MI bus 130A' and MI bus 130B'). Memory controller 610 controls and monitors the status of each data line 630 as is discussed in detail below. Memory controller 610 also controls crossbar 640.

Crossbar 640 is interfaced to the data lines of MI bus 130 (shown as MI bus 130A" and MI bus 130B"). Crossbar 640 functions as a switch, or interconnect, between the data lines of MI bus 130 and a memory data bus 650. Crossbar 640 allows data from data line 630 to flow from memory 620 to either one of PODs 120 in system platform 100.

### Processing Module (POD)

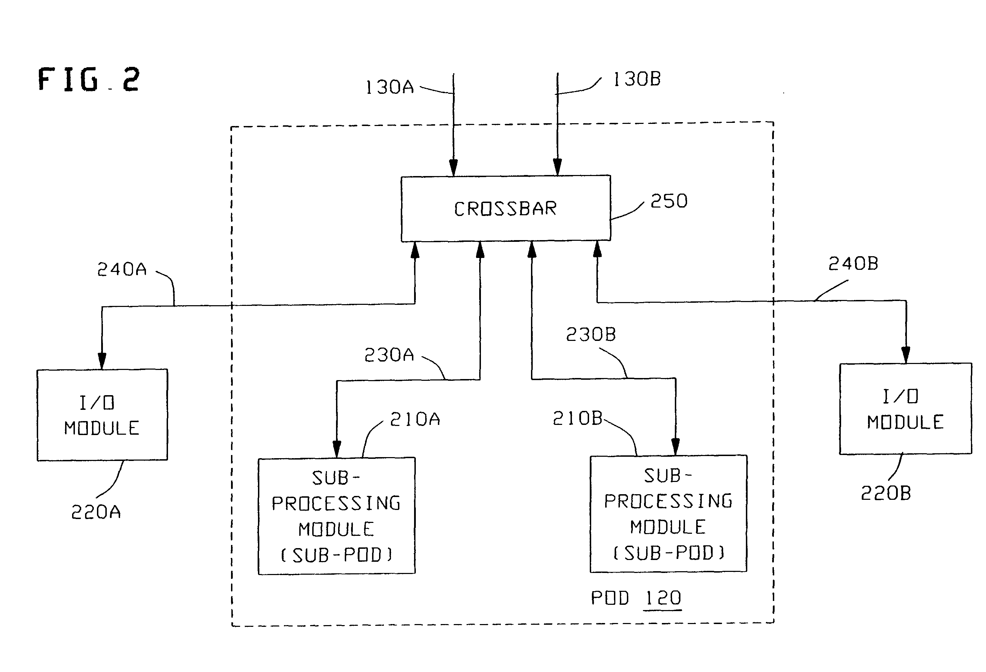

FIG. 2 illustrates POD 120 in further detail. POD 120 includes a crossbar 250 and one or more sub-processing modules (sub-PODs) 210 (shown as sub-POD 210A and sub-POD 210B). In a preferred embodiment of the present invention, each POD 120 includes two sub-PODs 210.

Crossbar 250 is interfaced to one or more sub-PODs 210 via a bus 230 (shown as bus 230A and bus 230B) and to one or more input/output (I/O) modules 220 (shown as I/O module 220A and I/O module 220B) via bus 240 (shown as bus 240A and bus 240B). Crossbar 250 functions as a switch between buses 230 and buses 240 to buses 130. In other words, crossbar 250 provides data paths from sub-PODs 210 and I/O modules 220 to MSUs 110. Sub-POD 210 is discussed in further detail below.

In one embodiment of the present invention, I/O modules 220 are external to sub-POD 210 as shown in FIG. 2. This embodiment allows system platform 100 to be configured based on a number of I/O devices used in a particular application. In another embodiment of the present invention, one or more I/O modules 220 are incorporated into sub-POD 210. I/O module 220 is also discussed in further detail below.

### I/O Module

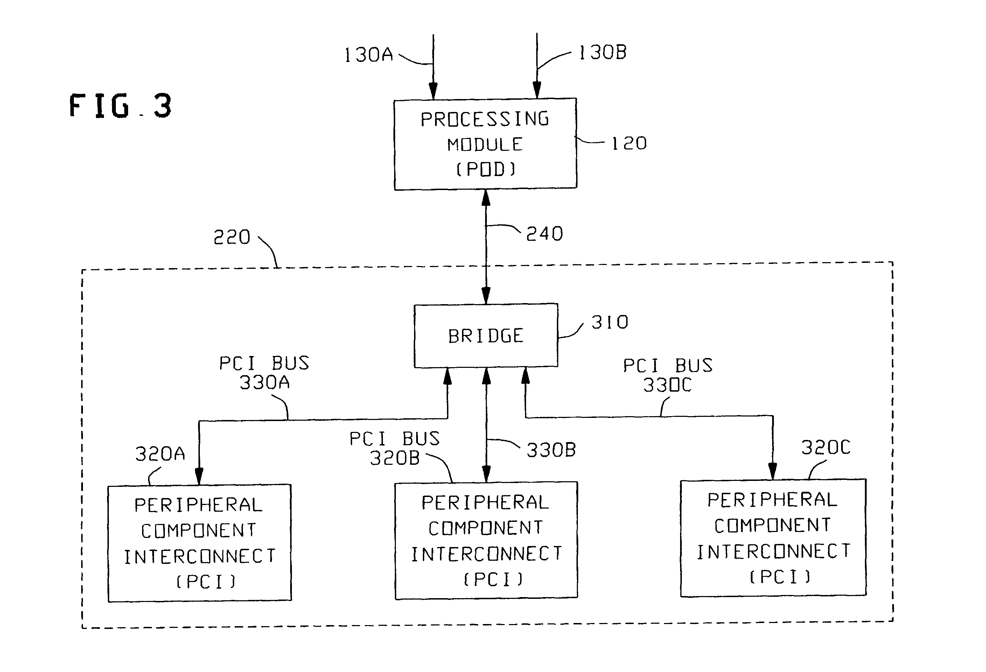

FIG. 3 illustrates input/output (I/O) module 220 in further detail. I/O module 220 functions as an interface between POD 120 and one or more I/O devices (not shown) connected to I/O module 220. I/O module 220 includes a bridge 310 connected to one or more peripheral component interconnects (PCI) 320 (shown as PCI 320A, PCI 320B, and PCI 320C) via a PCI bus 330 (shown as PCI bus 330A. PCI bus 330B, and PCI bus 330C). Bridge 310 is also connected to crossbar 250 in POD 120 via bus 240 as is shown in FIG. 2. Bridge 310 functions as a switch between bus 240 and buses 330 that allows POD 120 access to each of PCIs 320. PCI 320 is discussed in further detail below.

### Peripheral Component Interconnect

Peripheral component interconnect (PCI) 320 is a set of industry standard PCI add-in cards that connect various I/O devices (not shown) to I/O module 220. These devices include but are not limited to SCSI controllers, LAN controllers, and video controllers. In a preferred embodiment of the present invention, each PCI 320 can support up to 4 PCI channel modules (not shown).

### Sub-Processing Module

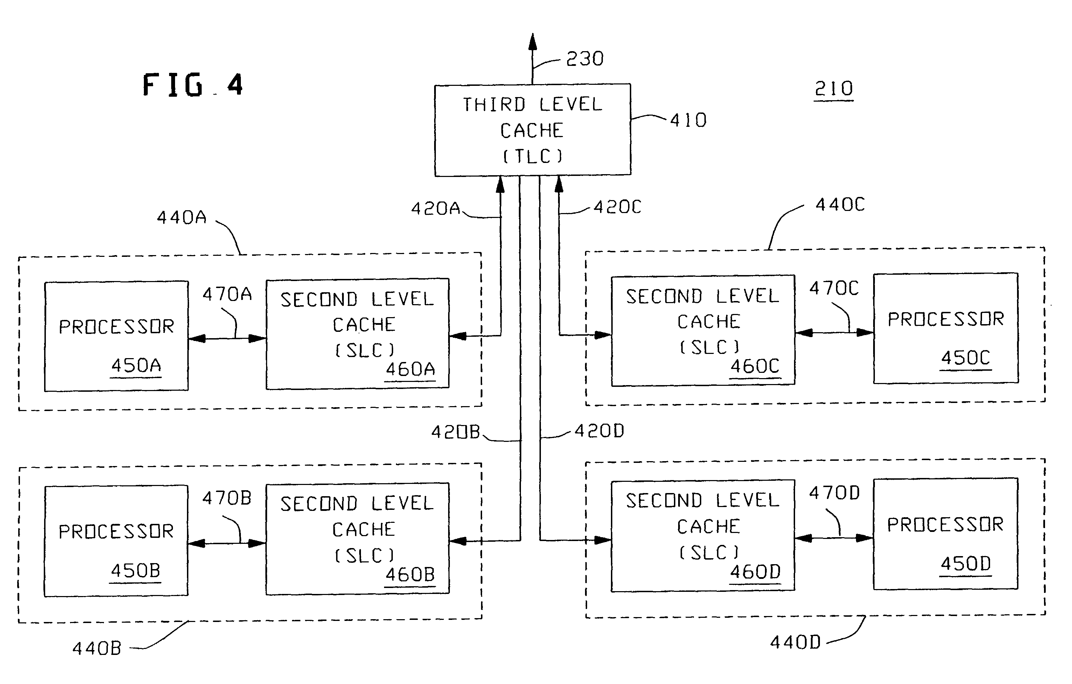

FIG. 4 illustrates one embodiment of sub-processing module (sub-POD) 210 in further detail. In this embodiment, sub-POD 210 includes a third-level cache (TLC) 410 and one or more coherency domains 440 (shown as coherency domains 440A-D). TLC 410 is connected to each coherency domain 440 via bus 420 (shown as bus 420A, bus 420B, bus 420C, and bus 420D). As is discussed in further detail below, TLC 410 maintains coherence among all of coherency domains 440.

In this embodiment of the present invention, each coherency domain 440 includes a second-level cache (SLC) 460 (shown as SLC 460A, SLC 460B, SLC 460C and SLC 460D) and processor 450 (shown as processor 450A, processor 450B, processor 450C, and processor 450D). SLC 460 is connected to TLC 410 via bus 420. SLC 460 is also connected to processor 450 via bus 470 (shown as bus 470A, bus 470B, bus 470C, and bus 470D).

Processor 450 and SLC 460 may be integrated in a single device, such as in an Intel Pentiurn® Pro device available from Intel. Alternately, processor 450 and SLC 460 may be separate devices, such as a Capricorn A-Series Instruction Processor and Second Level Cache (SLC). In the former case, SLC 460 is an internal cache to processor 450, and in the latter case, SLC 460 is an external cache to processor 450.

In a preferred embodiment, processor 450 includes an internal first level cache (not shown). In fact, most commercially available processors include at least a first level cache, and often include both a first level cache and a second level cache. The Intel Pentium® Pro processor includes internal first and second level caches. In other embodiments of the present invention, processors 450 may utilize external first level caches or not include first level caches at all.

In another embodiment of the present invention, each coherency domain 440 includes two or more successive levels of cache in addition to processor 450. Thus, multiple caches between TLC 410 and processor 450 may be used without departing from the scope of the present invention.

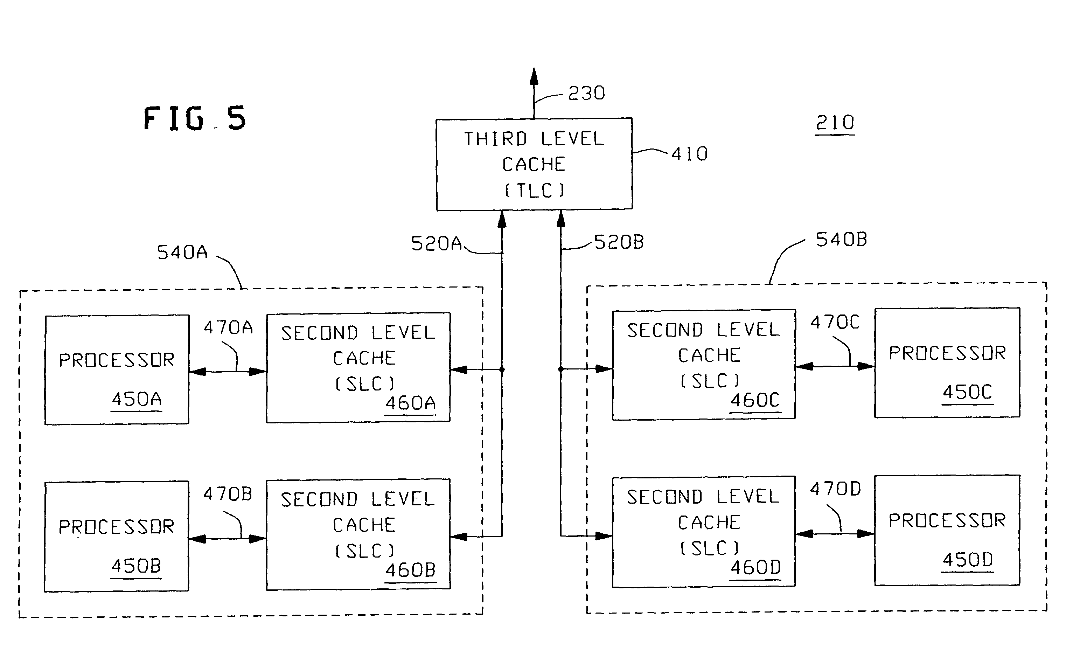

FIG. 5 illustrates a preferred embodiment of sub-processing module (sub-POD) 210 in further detail. In the preferred embodiment, sub-POD 210 includes a third-level cache (TLC) 410 and one or more coherency domains 540 (shown as coherency domain 540A and coherency domain 540B). TLC 410 is connected to each coherency domain 540 via bus 520 (shown as bus 520A and bus 520B). TLC 410 maintains coherence among all of coherency domains 440.

In the preferred embodiment of the present invention, each coherency domain 540 includes two or more second-level caches (SLC) 460 (shown as SLC 460A and SLC 460B in coherency domain 540A and as SLC 460C and SLC 460D in coherency domain 540B) and a processor 450 connected to each SLC 460 (shown as processor 450A, processor 450B, processor 450C, and processor 450D) connected to each SLC 460 via bus 470 (shown as bus 470A, bus 470B, bus 470C, and bus 470D).

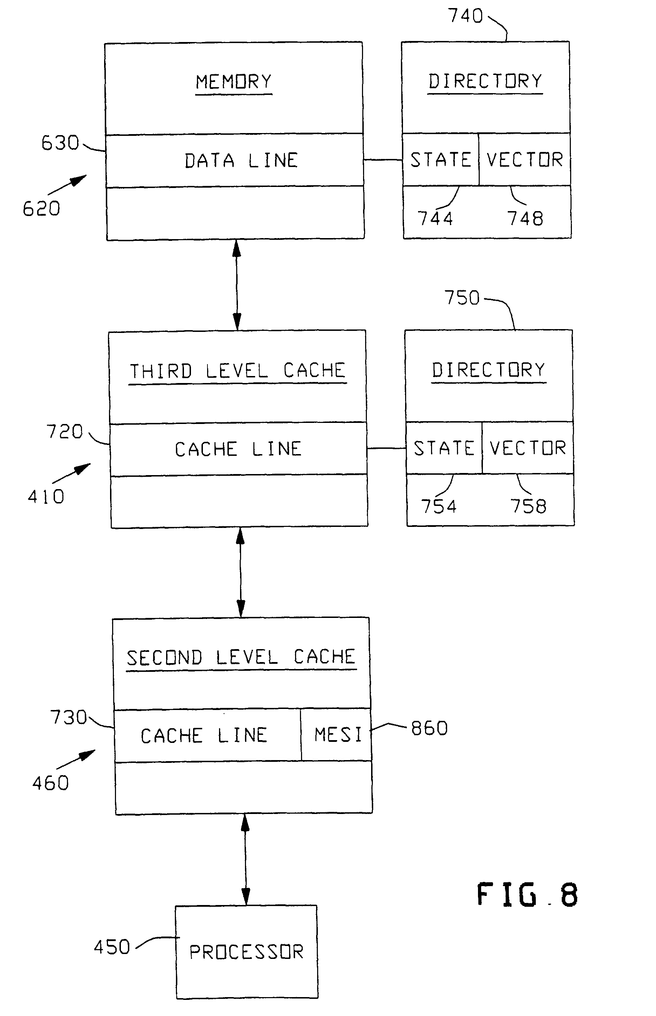

In the preferred embodiment of the present invention, SLCs 460 in each coherency domain 540 maintain coherence among themselves as well as within their own coherency domain. This is accomplished by sharing bus 520 and following a "snoopy protocol." According to this protocol, each SLC 460 "snoops" requests on bus 520 to ascertain the status of data line 630 (shown in FIG. 5 and FIG.8). This protocol is discussed in further detail below. As would be apparent to those skilled in the art, other configurations of coherency domains 540 as well as the number of levels of coherence could be implemented without departing from the scope of the present invention.

### Caches

Before discussing TLC 410 in further detail, a general discussion of caches is warranted. The present invention applies to several types of caches including a coherency cache and a data cache. A coherency cache is a cache that includes a memory for maintaining information associated with one of more data lines 630 used within a coherency domain of the cache. This information may include a status of data line 630, an ownership status of data line 630, and to whom ownership of data line 630 is granted. A data cache is a cache that includes memory for storing a copy of the one or more data lines 630. As would be apparent, the "copy" of a particular data line 630 in the data cache may or may not be a true, or identical, copy of the particular data line 630 as it exists elsewhere in system platform 100 due to subsequent modifications to the particular data line 630 within the data cache. This is discussed in further detail below.

Typical configurations of caches include: 1) no coherency cache, no data cache; 2) a coherency cache, no data cache; and 3) a coherency cache, a data cache. For purposes of the present invention, all caches include a coherency cache; however, the caches need not include a data cache as will be pointed out below. Henceforth, caches having only a coherency cache shall be referred to as "a coherency cache,"while caches having both a coherency cache and a data cache shall be referred to as "a data cache."

An agent within the coherency domain of a coherency cache can only obtain information regarding the status of data line 630. The agent must obtain the data from data line 630 from another source. The agent is able to ascertain the necessary action from the coherency cache to gain access to data line 630. An agent within the coherency domain of a cache having a data cache as well can obtain a copy of data line 630 in addition to its status.

### Coherence Protocols

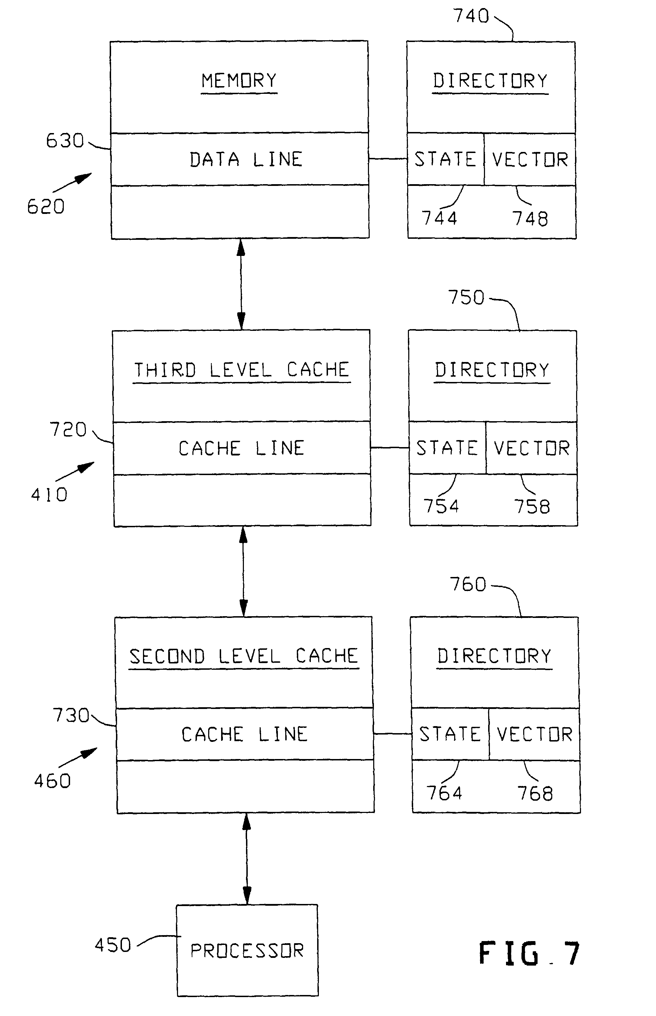

FIG. 7 illustrates one embodiment of a coherence protocol useful in the present invention. In this embodiment, memory 620 and each level of cache (i.e., TLC 410, SLC 460, etc.) implement a directory protocol for maintaining coherence. As shown in FIG. 7, memory 620 has a memory directory 740, TLC 410 has a TLC directory 750, and SLC 460 has an SLC directory 760. The directory protocol is discussed in further detail below.

FIG. 8 illustrates another embodiment of a coherence protocol useful in the present invention. In this embodiment, only memory 620 and TLC 410 implement a directory protocol for maintaining coherence. As shown in FIG. 8, memory 620 has a memory directory 740 and TLC 410 has a TLC directory 750. In this embodiment of the present invention, SLC 460 implements a "snoopy" protocol. Typically, snoopy protocols follow one of two approaches: write-invalidate or write-update (also referred to as write-broadcast). The embodiment of the present invention shown in FIG. 8 is a MESI (modified exclusive, shared, invalid) protocol, or write-invalidate protocol. As shown in FIG. 8, SLC 460 includes a cache line 730 with a MESI state 860.

Each cache 410, 460 in the embodiments of the present invention shown in FIG. 7 and FIG. 8 are data caches because each cache 410, 460 includes a memory for storing data line 630 as a cache line (shown as a cache line 720 in TLC 410 and a cache line 730 in SLC 460) as well as a status of data line 630 (shown as a state 754 and vector 758 in TLC directory 750, as a state 764 and vector 768 in SLC directory 760 in FIG. 7, or as MESI state 860 in FIG. 8). In these embodiments of the present invention, cache lines 720, 730 include a copy of data line 630 in their respective caches 410, 460. However, according to the present invention, cache lines 720, 730 need not include a copy of data line 630. In other words, the present invention is suitable for use with coherency caches as well. For purposes of this discussion, unless otherwise noted, all caches are assumed as being data caches.

### Directory Protocols

In a directory protocol, information about each data line 630 is monitored and updated by a controller (e.g., memory controller 610). In one embodiment of the present invention, this information includes a state and a vector (shown as a state 744 and a vector 748 in directory 740, a state 754 and a vector 758 in directory 750, and a state 764 and a vector 768 in director 760). States 744, 754, 764 include the status of the access granted to an agent with respect to data line 630, if in fact, data line 630 exists within the respective cache. The access granted to an agent is sometimes referred to as "ownership" because the agent must own the data line in order to perform certain operations.

In the present invention, the status of the access includes "shared" and "exclusive." Shared status indicates that one or more agents own data line 630. This is the minimum level of ownership required to have read access to data line 630. One or more agents may have shared status simultaneously. Thus, each agent may freely read data line 630.

Exclusive status indicates that a single agent owns data line 630. This is the minimum level of ownership required to have write access to data line 630. Only one agent may have exclusive ownership at any given time. Thus, only this one agent can write to or modify data line 630.

Other statuses exist depending on the nature of particular agent. These other statuses may include present, modified, invalid, or unknown. "Present" status means that a copy of data line 630 is present in that particular cache or memory and that no other lower level caches have any form of access to data line 630. "Invalid" status indicates that the copy of that data line 630 in that particular cache is not valid because it was never fetched into the particular cache or because it is an old copy due to a write performed on data line 630 by another agent. "Modified" status indicates that an agent having exclusive ownership of the copy of that data line 630 has modified the copy of data line 630. At some time, typically in response to a request to read/write by another agent, the copy of data line 630 must be written back to memory 620. "Unknown" status indicates that a copy of data line 630 does not exist within that particular cache. However, a copy of data line 630 may exist within a lower level cache associated with that particular cache.

Vector 748 identifies each lower level cache that presently has access to data line 630. When data line 630 has an exclusive status, vector 748 identifies only the one lower level cache that has access to data line 630. When data line 630 has a shared status, vector 748 identifies the one or more lower level caches that have access to data line 630. When data line 630 has a present status, vector 748 identifies no caches because no access to data line 630 has been granted to any lower level cache.

### MESI Protocols

As indicated above, a MESI protocol includes a MESI status 860 in each cache line 730 in SLC 460. MESI status 860 includes four statuses: modified, exclusive, shared, and invalid. These statuses are similar to those discussed above with respect to directory protocols.

The key difference between the directory protocol and the MESI protocol is that the MESI protocol maintains coherency among caches at the same level. In other words, a higher level cache is not necessary to maintain coherency among these caches. In the MESI protocol, coherency is maintained by each cache "snooping" or monitoring a common bus. By snooping, each cache maintains, updates, or requests a change to MESI status 860.

### Caching and Coherency

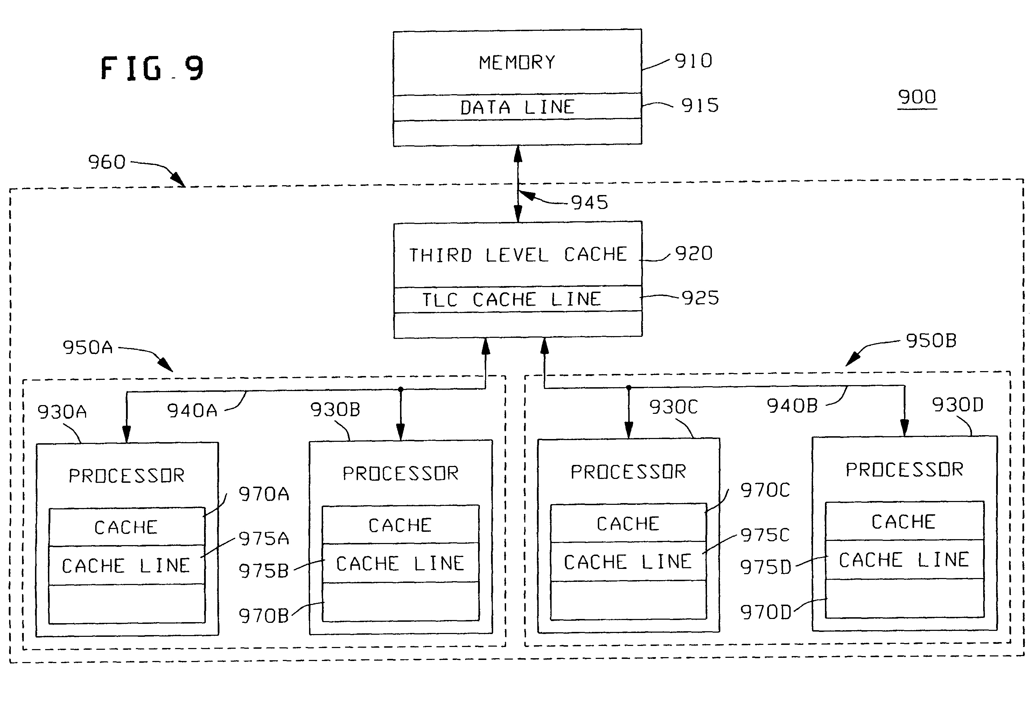

FIG. 9 illustrates a coherent system 900 used to describe caching and coherency according to the present invention. Coherent system 900 includes a memory 910, a third level cache (TLC) 920, and four processors 930 (shown as processor 930A, processor 930B, processor 930C, and processor 930D). Memory 910 is connected to TLC 920 via bus 945. TLC 920 is connected to processor 930A and processor 930B via bus 940A. TLC 920 is connected to processor 930C and processor 930D via bus 940B. The use of two processor buses 940A and 940B provides lower latency and higher bandwidth than having all four processors 930 on a single bus.

Memory 910 includes a plurality of data lines 915. For purposes of discussion and clarity of drawing, data line 915 includes both data and information pertaining to the data in accordance with a coherency protocol such as a directory protocol as discussed above. In the case of a directory protocol, this information includes, but is not limited to, a status of data and a vector identifying the recipient of the data.

TLC 920 includes one or more third level cache (TLC) cache lines 925. TLC 920 may be either a coherency cache or a data cache. Thus, at a minimum, TLC cache lines 925 include information pertaining to data cached from memory 910 in accordance with a coherency protocol. In a preferred embodiment of the present invention, TLC 920 follows a directory protocol.

Processors 930 may include one or more caches 970, such as a first level cache (not shown), a second level cache (not shown), etc. Each cache 970 (shown as cache 970A in processor 930A, cache 970B in processor 930B, cache 970C in processor 930C, and cache 970D in processor 930D) includes one or more caches lines 975 (shown collectively as cache line 975A in cache 970A, cache line 975B in cache 970B, cache line 975C in cache 970C, and cache line 975D in cache 970D). Caches 970 may be either coherency caches or data caches. Thus, cache lines 975 include information pertaining to data cached from memory 910 or TLC 920 in accordance with a coherency protocol. In a preferred embodiment of the present invention, caches 970 are data caches and follow a MESI protocol.

Caching schemes have been developed to reduce the time otherwise required by a processor, such as processor 930A, to read data line 915 from memory 910. A cache in processor 930A, such as cache 970A, is used to store a copy of data line 915 as cache line 975A. Cache 970A is typically comprised of a small amount of fast memory located in close proximity to or within processor 930A. This allows processor 930A to quickly access cache line 975A from cache 970A without the latency required by a read to data line 915 from memory 910. When processor 930A reads a particular data line 915, cache 970A is checked to determine whether a cache line 975A corresponding to the particular data line 915 exists in cache 970A. A "read hit" occurs when corresponding cache line 975A is found in cache 970A. A "read miss" occurs when corresponding cache line 975A is not found in cache 970A.

If processor 930A gets a read hit, processor 930A reads cache line 975A from cache 970A. If processor 930A gets a read miss, processor 930A must find a cache line in another cache (e.g., another cache in processor 930A, TLC cache 920, etc.) or read data line 915 from memory 910. In this case, once processor 930A gets its particular data line 915, whether from memory 910 or another cache, processor 930A stores the particular data line 915 in cache 970A as cache line 975A. In this way, subsequent reads by processor 930A of the particular data line 915 will achieve read hits from cache 970.

Other caches, such as TLC 920, operate as additional caches between processor 930A and memory 910 to reduce the number of actual reads of data line 915 from memory 910. As alluded to above, when processor 930A receives a read miss from cache 970A, processor 930A determines whether any caches have a copy of data line 915.

After checking its own internal cache(s) for a copy of data line 915, processor 930A determines whether any processor 930 or TLC 920 on bus 940A has a cache line 975 or 925 corresponding to data line 915. This is accomplished according to well known techniques in caches using MESI protocols. Processor 930A issues a request to bus 940A for a copy of data line 915. Each processor 930 and TLC 920 connected to bus 940A monitors bus 940A for such requests. Any processor 930 or TLC 920 that has a cache line corresponding to data line 915 may respond to the request. The first processor 930 or TLC 920 that responds to the request provides its cache line 975 or 925 to processor 930A.

If none of processors 930 or TLCs 920 respond to the request, TLC 920 determines whether a copy of data line 915 exists within any of its other coherency domains 950. In this embodiment, TLC 920 determines whether a copy of data line 915 exists within coherency domain 950B.

If data line 915 exists within coherency domain 950B, TLC 920 issues a request to bus 940B for data line 915. If any processor 930 responds to the request by providing a cache line 975 corresponding to data line 915, TLC 920 receives cache line 975 and provides it to processor 930A. This "bus to bus" transfer is an improved optimization over conventional caching systems. If none of processors 930 respond to the request, TLC 920 issues a request to memory 910 for data line 915 and provides it as cache line 975A to processor 930A. In addition, TLC 920 stores a copy of the requested data line 915 as TLC cache line 925.

If data line 915 does not exist within coherency domain 950B, TLC 920 issues a request to memory 910 for data line 915 and provides it as cache line 975A to processor 930A. Again, TLC 920 stores a copy of the requested data line 915 as TLC cache line 925.

An efficient caching scheme is necessary to reduce the number of cycles required to access data in coherent system 900 because reads to various memories (i.e. caches, buses, other processors, etc.) require various amounts of bus cycles. The more bus cycles that are required, the more time it takes to access the particular memory. In coherent system 900, reads by processor 930A from cache 970A are the fastest, followed by (in order of increasing amounts of time) reads from cache 970 on bus 940A, reads from TLC 920, reads from the other coherency domain 950B, and finally, reads from memory 910.

Caching schemes have been extended to be used with multiple processors such as processors 930A and 930B which share memory 910. In such applications, caching allows copies of data lines 915 to be utilized not only to reduce latency in reading memory 910 but also to reduce the number of memory contentions where two or more processors attempt to simultaneously access memory 910.

In order for the overall caching scheme to function properly, each processor 930 and each cache 920, 970 operating in the system must follow the rules of coherency in order for the overall caching scheme to function properly. Each processor 930 and each cache 920, 970 are referred to as caching agents, or more simply, agent. Thus, each agent must follow certain procedures to ensure that data line 915 remains coherent.

Coherency requires 1) that a read of a data line returns the value of that data line most recently written, and 2) that the write of a data line invalidates all copies of that data line possessed by agents having read access.

In order to maintain coherent data, a hierarchy is set up in a coherent system whereby each agent is responsible for maintaining coherency within a particular coherency domain. A coherency domain is a region in coherent system 900 whose coherent data is maintained by a particular agent. FIG. 9 illustrates several coherency domains including a coherency domain 960, and two coherency domains 950 (shown as coherency domain 950A and coherency domain 950B), as well as one or more coherency domains (not shown) within each processor 930. Memory 910 maintains coherency domain 960. TLC 920 maintains coherency domain 950A and coherency domain 950B. Processor 930 maintains any coherency domain for any internal caches such as cache 970. Thus, memory 910 is at the highest level in the hierarchy of coherent system 900, followed by TLC 920. The lowest level of coherency in coherent system 900 is processor 930.

As shown in FIG. 9, a coherency domain may itself include one or more coherency domains and their associated agents. For example, coherency domain 960 includes coherency domains 950 and coherency domains in processor 930.

Coherence is maintained by granting particular agents ownership to a data line 915 from memory 910. In the simplest terms, an agent may have read access to data line 915, write access to data line 915, or no access to data line 915. As discussed above, only one agent may have write access to data line 915 at a particular time, while many agents may have read access to data line 915.

In coherent system 900, memory 910 must maintain state 744 and vector 748 (shown in FIG.7 FIG.8) for each data line 915. This is necessary because, according to the present invention, ownership resides in a particular agent until another agent requests exclusive ownership of data line 915. As is well known in the art, this is an efficient method of distributing data lines 915 to those agents who have the most need for them.

The ownership an agent has with respect to data line 915 is typically maintained by the agent as well as any other agent whose coherency domain includes an agent with access to data line 915. For example, if first level cache 930A has read access to data line 915, then memory 910, second level cache 920A, and first level cache 930A each recognize that fact.

However, one embodiment of the present invention does not require that higher levels caches include all caches lines within their respective coherency domains. Caches that do not include all cache lines within their respective coherency domains are referred to as non-inclusive caches. Non-inclusive caches are discussed in further detail below.

### Ownership Rights

Ownership rights granted to an agent with respect to a particular data line 915 define what operations (i.e., read, write, etc.) are permitted by that agent and what ownership rights that agent is allowed to grant to lower level agents.

In one embodiment of the present invention, ownership rights include write, read, and invalid. Write ownership is required in order for a particular agent to write to or modify data line 915. An agent having write ownership also has read ownership with respect to data line 915. Only one agent has write ownership with respect to a particular data line 915 at any given time. In effect, this means that the particular agent has the only copy of data line 915. Allowing only one agent write access to the particular data line 915 ensures coherency in coherent system 900. An agent with write ownership may grant a lower level agent any form of ownership rights.

Read ownership indicates that one or more agents in coherent system 900 have ownerships rights to data line 915. In effect, this means that each of these agents may have a copy of data line 915 in their respective caches. An agent with read ownership may perform read operations on data line 915 but may not perform write operations on data line 915. This is because other copies may exist outside of memory 910. An agent with read ownership may grant a lower level agent only read ownership.

Invalid ownership indicates that the agent is not aware of the ownership rights of the particular data line 915. This may occur in two different cases. The first case is obvious: the agent has not been granted any ownership rights with respect to data line 915. The second case is less obvious: the agent, at one time, was granted ownership rights and has subsequently "forgotten" them. "Forgotten" means that due to the limited size of its cache, the agent has replaced the particular data line 915 with another data line 915. The second case occurs with agents employing non-inclusive caches as described above.

### Granting Ownership Rights

In a preferred embodiment of the present invention, a higher level agent maintains the status of the ownership it granted with respect to data line 915 to the next lower level agent in coherent system 900. For example, memory 910 maintains the status of the ownership with respect to data line 915 it granted to TLC 920. Similarly, TLC 920 maintains status of the ownership with respect to TLC cache line 925 corresponding to data line 915 that it granted to coherency domain 950. However, as discussed above with respect to write ownership, only one agent in coherent system 900 may have write ownership with respect to data line 915 at any given time.

The ownership rights granted to an agent from a higher level agent and the ownership rights granted by an agent to a lower level agent define an agent's effective ownership. In other words, an agent may appear to have one form of ownership with respect to the higher level agent, but effectively has another form of ownership because of a grant of ownership rights to the lower level agent. For example, memory 910 grants TLC 920 write ownership to data line 915. Subsequently, TLC 920 grants coherency domain 950A read ownership to TLC cache line 925 corresponding to data line 915. TLC 920 apparently has write ownership with respect to memory 910 but effectively only has read ownership because of its subsequent grant of read ownership to coherency domain 950A. Table I summarizes an agent's effective ownership in terms of ownership rights that it has received and ownership rights that it has granted.

**TABLE I -**

| **EFFECTIVE OWNERSHIP** | | |
|---|---|---|
| OWNERSHIP OF AGENT_{N} | OWNERSHIP GRANTED TO AGENT_{N-1} | EFFECTIVE OWNERSHIP OF AGENT_{N} |
| write | none | write |
| | read | read |
| | write | invalid |
| read | none/read | read |
| invalid | none | invalid |

An agent can grant ownership according to Table I at any time such ownership rights are requested by a lower level agent. However, before an agent can grant ownership rights that exceed its effective ownership, the agent must either request higher ownership rights from the higher level agent, or request a return of the ownership rights granted to the lower level agent. Table II summarizes the requests for ownership rights required to change effective ownership. These requests are discussed in further detail below.

**TABLE II -**

| **REQUESTING CHANGES TO EFFECTIVE OWNERSHIP** | | | | |
|---|---|---|---|---|
| DESIRED EFFECTIVE OWNERSHIP OF AGENT_{N} | OWNERSHIP GRANTED TO AGEN T_{N-1} | CURRENT OWNERSHIP OF AGENT_{N+1} | EFFECTIVE OWNERSHIP OF AGENT_{N} | REQUIRED REQUESTS TO LEVEL N+/-1 |
| write | write | write | invalid | return and purge to agentₙ₋₁ |
| | | read | read | purge to agentₙ₋₁ |
| | | none | write | - |
| | read | read | read | purge to agentₙ₋₁ and request write to agentₙ₊₁ |
| | | none | read | request write to agentₙ₊₁ |
| | invalid | none | invalid | request write to agentₙ₊₁ |
| read | write | write | invalid | return and keep to agentₙ₋₁ |
| | | read | read | - |
| | | none | write | - |
| | read | read | read | - |
| | | none | read | - |
| | invalid | none | invalid | request read to agentₙ₊₁ |

### Ownership Change Requests

Table II includes several ownership change requests including "request read," "request write," "purge," "return," and "keep." Each of these requests is described in further detail.

"Request read" is a request by an agent for read ownership with respect to a particular data line 915. That is, the agent is requesting a shared copy of data line 915 from another agent. According to a preferred embodiment of the present invention, for agents employing a directory-based protocol, the agent requests read ownership from the next higher level agent. For agents employing a snoopy-based protocol, the agent may request read ownership from the next higher level agent or from an equivalent level agent.

"Request write" is a request by an agent for write ownership with respect to a particular data line 915. That is, the agent is requesting an exclusive copy of data line 915 from another agent. According to a preferred embodiment of the present invention, for agents employing a directory-based protocol, the agent requests write ownership from the next higher level agent. For agents employing a snoopy-based protocol, the agent may request write ownership from the next higher level agent or from an equivalent level agent.

"Return" is a request by an agent for a lower level agent to return a copy of data line 915 for which the lower level agent has write ownership whether or not the data has been modified. This request is necessary when another agent desires write ownership with respect to the particular data line 915. This request makes sure that all changes to data line 915 are incorporated back to a higher level agent before another agent subsequently modifies the data in data line 915. In a preferred embodiment of the present invention, the changes to data line 915 are incorporated back to the agent whose coherency domains include both the agent relinquishing ownership of data line 915 and the agent requesting ownership of data line 915. In some cases, the only agent to whom this applies is memory 910. In another embodiment of the present invention, the changes to data line 915 are incorporated back to memory 910 before write ownership is granted to any other agent.

"Purge" is a request by an agent to a lower level agent for the lower level agent to remove or destroy a copy of a particular data line 915 that it has in its cache. A purge request is necessary when another agent is requesting write ownership with respect to data line 915 to ensure that only one copy of data line 915 exists in any of the caches. Practically, this is accomplished by marking a status of the copy of data line 915 as "not present" or "invalid," depending on the nature of the agent's cache.

"Return and keep" is similar to a "return" request except that the lower level agent may maintain or continue to use a copy of the particular data line 915 that it has in its cache. A return and keep request is issued when another agent is requesting read ownership with respect to data line 915 and the lower level agent has write ownership.

A feature of the present invention allows TLC 920 to "filter" return and purge operations from memory so that they do not necessarily have to be issued to buses 940. For example, if a purge operation from memory 910 to TLC 920 for a particular cache line 925 finds that ownership for the particular cache line 925 has not been granted to any lower level agents, TLC 920 simply invalidates the particular cache line 925 without issuing a request to a lower level agent. This feature improves performance because the lower level agents are not impacted.

### Data Status

Data status of a particular data line 915 describes the status of any operations that may have been performed on that particular data line 915 within a particular cache of an agent. In memory 910, data status for data line 915 includes "present," "shared," and "exclusive." In TLC 920, data status for TLC cache line 925 includes "not present," "modified," and "clean." In coherency domains 950, data status for cache line 975 in cache 970 includes "modified," "exclusive," "shared," and "invalid." The data status with respect to memory 910, TLC 920, and coherency domains 950 is described in further detail below.

### Data Status in Memory

Data status in memory 910 includes "present," "exclusive," and "shared." "Present" status indicates that no copies of data line 915 exist outside of memory 910; data in data line 915 is not found in any other agents' caches 920, 970. Present status indicates that memory 910 may grant any lower level agent any form of ownership rights with respect to data line 915.

"Exclusive" status indicates that an agent has been granted exclusive ownership rights to data line 915. In effect, exclusive status indicates that one copy of data line 915 exists in coherent system 900 outside of memory 910. Exclusive status indicates that memory 910 has granted an agent rights to modify data line 915. Exclusive status thus prevents memory 910 from granting any other agent ownership rights to data line 915 without first changing the ownership rights of the agent having exclusive ownership rights.

"Shared" status indicates that one or more agents have been granted shared ownership rights to data line 915. In effect. shared status indicates that one or more copies of data line 915 exist in coherent system 900 outside of memory 910. Shared status indicates that memory 910 has allowed one or more agents with rights to read from data line 915 but not with rights to write to or modify data line 915. Shared status allows memory 910 to grant other agents shared ownership rights to data line 915 but not exclusive ownership rights.

In addition to data status of data line 915, memory 910 also maintains a vector 748 that identifies which agents have been granted any form of ownership rights. In a preferred embodiment of the present invention, memory 910 only grants ownership rights to TLCs 920. Thus, vector 748 identifies which of TLCs 920 in coherent system 900 have ownership rights to each particular data line 915.

### Data Status in Third Level Cache

Data status in TLC 920 includes "not present." "modified," and "clean." "Not present" status indicates that a TLC cache line 925 corresponding to data line 915 exists in TLC 920 but TLC cache line 925 does not include the data of data line 915. In other words, a TLC cache line only includes information (i.e., status, vector, etc.) corresponding to data line 915. Not present is used to save the costs associated with copying data from data line 915 into TLC cache line 925 when the likelihood that a processor 930 will modify that data is high.

"Modified" status indicates that TLC 920 has exclusive ownership rights to data line 915 and has subsequently modified the data in TLC cache line 925 corresponding to data line 915. Modified status indicates that one copy of data line 915 exists in coherent system 900 as TLC cache line 925 and that copy has been changed. Modified status thus prevents memory 910 from granting any other agent ownership rights to data line 915 without first retrieving the modified copy of data line 915 from TLC 920 and changing the ownership rights granted to TLC 920.

"Clean" status indicates that the data in TLC cache line 925 corresponding to data line 915 has not been modified.

In addition to data status of data line 915, TLC 920 also maintains a vector that identifies which bus 940 and hence which processors 930 have been granted any form of ownership rights to data line 915. In a preferred embodiment of the present invention, TLC 920 grants ownership rights to bus 940 rather than a particular processor 930 connected to bus 940. In effect, TLC 920 grants ownership rights to a particular coherency domain 950. Thus, agents within coherency domain 950 (in this case, one or more processors 930) determine amongst themselves which agent is granted what ownership rights based on the ownership rights granted by TLC 920. Typically, the agent requesting ownership rights from TLC 920 is the agent that responds to the granting of the ownership rights to coherency domain 950. Thus, in a preferred embodiment of the present invention, the vector identifies which coherency domain 950 in coherent system 900 has ownership rights to each particular TLC cache line 925.

### Data Status in Coherency Domains

Data status in coherency domains 950 includes "modified," "exclusive," "shared," and "invalid." "Modified" status indicates that one agent in coherency domain 950 (i.e., one processor 930 connected to bus 940) has exclusive ownership rights to data line 915 and has subsequently modified the data in cache line 975 of cache 970 corresponding to data line 915. Modified status indicates that one copy of data line 915 exists in coherent system 900 as cache line 975 and that copy has been changed. A cache line 975 with modified status must, at some point, be rewritten to a higher level agent (i.e., TLC 920 or memory 910) before other agents can utilize data line 915.

"Exclusive" status indicates that one agent in coherency domain 950 (i.e., one processor 930 connected to bus 940) has exclusive ownership rights to data line 915, and has not modified the data in cache line 975 in cache 970 corresponding to data line 915. Exclusive status indicates that one copy of data line 915 exists in coherent system 900 as cache line 975 and that copy has not been changed. A cache line 975 with exclusive status need not be written to a higher level agent before other agents can utilize data line 915 because the copy of data line 915 has not changed.

"Shared" status indicates that one or more agents in coherency domain 950 (i.e., one or more processors 930 connected to bus 940) has shared ownership rights to data line 915. In effect, shared status indicates that one or more copies of data line 915 exist in coherency domain 950 as a cache line 975 in caches 970. Shared status indicates that memory 910 has allowed one or more agents, including processors 930, with rights to read from data line 915 but not with rights to write to or modify data line 915.

In a preferred embodiment of the present invention, coherency domains 950 do not monitor which processors 930 have what ownership rights to data line 915. This is left to processors 930 themselves according to well known techniques of caching using MESI protocols.

### Coherency States

A state of a particular data line 915 with respect to coherency is referred to as a coherency state. The coherency states vary depending on the cache and its coherency domain and their associated needs and requirements. In general, a coherency state of a particular data line 915 with respect to the particular agent includes: ownership, ownership granted, and data status. Ownership refers to the ownership received by the agent from a higher level agent. Ownership granted refers to the ownership granted by the agent to a lower level agent. Data status refers to the status of the data from data line 915 as it exists in the agent's cache. Table III includes the coherency states of memory 910. Table IV includes the coherency states for TLC 920. Table VI includes the coherency states for processor 930. Each of these coherency states is discussed in further detail below.

### Coherency States for Memory

Memory 910 requires only the ownership rights granted to lower level agents for its coherency state. Because memory 910 is at the highest level in coherent system 900, memory 910 has implied write ownership. In other words, because memory 910 is the highest level agent, it necessarily has the highest level of ownership rights. In addition, data status is implied by the ownership rights granted to lower level agents. In other words, data status is valid for data line 915 if no write ownership with respect to data line 915 has been granted to a lower level agent. Table III summarizes the coherency states for memory 910 according to a preferred embodiment of the present invention.

**TABLE III -**

| **COHERENCY STATES FOR MEMORY** | | | |
|---|---|---|---|
| COHERENCY STATE NAME | OWNERSHIP (IMPLIED) | OWNERSHIP GRANTED | DATA STATUS (IMPLIED) |
| Present | Write | None | Clean |
| Shared | | Read | Clean |
| Exclusive | | Write | Not Present |

### Coherency States for Third Level Cache

TLC 920 requires all three portions of the general coherency state including ownership, ownership granted, and data status. Table IV summarizes the coherency states for TLC 920 according to a preferred embodiment of the present invention. Table V (explains or defines) the status of TLC 920 with respect to each coherency state listed in Table IV.

The coherency states for TLC 920 are named in Table IV using three letters. The first letter in the state name refers to the ownership granted to TLC 920 by memory 910 (e.g., 'E' is exclusive or write, 'S' is shared or read, 'U' is unknown). The second letter in the state name refers to the status of the data (e.g., 'M' is modified, 'C' is clean, 'N' is not present). The third letter in the state name refers to the ownership granted to a lower level agent by TLC 920 (e.g., 'E' is exclusive or write, 'S' is shared or read, 'U' is unknown).

**TABLE IV -**

| **THIRD LEVEL CACHE COHERENCY STATES** | | | | |
|---|---|---|---|---|
| TLC COHERENCY STATE NAME | COHERENCY VECTOR ID | OWNERSHIP | OWNERSHIP GRANTED | DATA STATUS |
| EME | (10,01) | Write | Write | Modified |
| EMS | (00) | | None | |
| | (01,10,11) | | Read | |
| ECS | (00) | | None | Clean |
| | (01,10,11) | | Read | |
| ENE | (01,10) | | Write | Not Present |
| ECE | (01,10) | | Write | Clean |
| SCS | (00) | Read | None | Clean |
| | (01,10,11) | | Read | Clean |
| UNU | - | Unknown | Unknown | Not Present |

In one embodiment of the present invention, the coherency vector IDs listed in Table IV identify processors 930 to which TLC 920 has granted ownership rights. In a preferred embodiment of the present invention, the coherency vector ID identifies which coherency domains 950 to which TLC 920 has granted ownership rights. In this embodiment, the coherency vector ID has four values: '00' identifies neither coherency domain 950 as receiving any ownership rights, '10' identifies coherency domain 950A as receiving ownership rights, '01' identifies coherency domain 950B as receiving ownership rights, and '11' identifies both coherency domain 950A and coherency domain 950B as receiving ownership rights. As would be apparent, other coherency vector IDs are available depending on how many processors 930 or coherency domains 950 are connected to TLC 920.

**TABLE V -**

| **COHERENCY STATE MEANING** | |
|---|---|
| TLC COHERENCY STATE NAME | MEANING OF COHERENCY STATE |
| EME | • TLC HAS WRITE OWNERSHIP |
| | • TLC DATA IS MODIFIED |
| | • TLC HAS GRANTED WRITE OWNERSHIP TO A COHERENCY DOMAIN IDENTIFIED BY VECTOR ID |
| EMS | • TLC HAS WRITE OWNERSHIP |
| | • TLC DATA IS MODIFIED |
| | • TLC HAS GRANTED READ OWNERSHIP TO A COHERENCY DOMAIN IDENTIFIED BY VECTOR ID |
| ECS | • TLC HAS WRITE OWNERSHIP |
| | • TLC DATA IS CLEAN |
| | • TLC HAS GRANTED READ OWNERSHIP TO A COHERENCY DOMAIN IDENTIFIED BY VECTOR xID |
| ENE | • TLC HAS WRITE OWNERSHIP |
| | • TLC DATA IS NOT PRESENT |
| | • TLC HAS GRANTED WRITE OWNERSHIP TO A COHERENCY DOMAIN IDENTIFIED BY VECTOR ID |
| ECE | • TLC HAS WRITE OWNERSHIP |
| | • TLC DATA IS CLEAN |
| | • TLC HAS GRANTED WRITE OWNERSHIP TO A COHERENCY DOMAIN IDENTIFIED BY VECTOR ID |
| SCS | • TLC HAS READ OWNERSHIP |
| | • TLC DATA IS CLEAN |
| | • TLC HAS GRANTED READ OWNERSHIP TO A COHERENCY DOMAIN IDENTIFIED BY VECTOR ID |
| UNU | • TLC HAS UNKNOWN OWNERSHIP |
| | • TLC DATA IS NOT PRESENT |
| | • TLC HAS GRANTED UNKNOWN OWNERSHIP TO A COHERENCY DOMAIN |

### Coherency States for Processors

Processors 930 require two portions of the general coherency state including ownership and data status. Ownership granted is not required because processors 930, being the lowest level agents in coherent system 900, are not able to grant ownership to any other agents. Table VI summarizes the coherency states for processors 930 according to a preferred embodiment of the present invention.

**TABLE VI -**

| **PROCESSOR COHERENCY STATES** | | | |
|---|---|---|---|
| PROCESSOR COHERENCY STATE NAME | OWNERSHIP | OWNERSHIP GRANTED | DATA STATUS |
| M | WRITE | NONE | MODIFIED |
| E | WRITE | NONE | CLEAN |
| S | READ | NONE | CLEAN |
| I | INVALID | NONE | NOT PRESENT |

### Valid Data

Due to the nature of the caching scheme employed by the present invention, various copies of data line 915 may legitimately exist within various caches in coherency system 900. Table VII lists where valid copies of data line 915 might exist based on the coherency of memory 910, TLC 920, and processors 930.

**TABLE VII -**

| **VALID COPIES OF DATA LINE** | | | | | |
|---|---|---|---|---|---|
| MEMORY STATE | TLC STATE | PROCESSOR STATE | MEMORY DATA | TLC DATA | PROCESSOR DATA |
| PRESENT | UNU | I | VALID | INVALID | INVALID |
| SHARED | SCS | S | VALID | VALID | VALID |
| | SCS | I | VALID | VALID | INVALID |
| | UNU | S | VALID | INVALID | VALID |
| | UNU | I | VALID | INVALID | INVALID |
| EXCLUSIVE | ECS | S | VALID | VALID | VALID |
| | ECS | I | VALID | VALID | INVALID |
| | ECE | M | INVALID | INVALID | VALID |
| | ECE | E/S | VALID | VALID | VALID |
| | ECE | I | VALID | VALID | INVALID |
| | EMS | S | INVALID | VALID | VALID |
| | EMS | I | INVALID | VALID | INVALID |
| | EME | M | INVALID | INVALID | VALID |
| | EME | E/S | INVALID | VALID | VALID |
| | EME | I | INVALID | VALID | INVALID |
| | ENE | M | INVALID | INVALID | VALID |
| | ENE | E/S | VALID | INVALID | VALID |
| | ENE | I | VALID | INVALID | INVALID |
| | UNU | M | INVALID | INVALID | VALID |
| | UNU | E/S | VALID | INVALID | VALID |
| | UNU | I | VALID | INVALID | INVALID |

### Third Level Cache State Transitions

Table VIII shows the state transitions for TLC 920 in response to a request by a lower level agent. In the preferred embodiment of the present invention, this lower level agent, corresponding to coherency domain 950, is actually processor 930. However, in other embodiments, coherency domain 950 includes other levels of caches as discussed above. Thus, TLC 920 may respond to requests by other caches who in turn are responding to requests by processors such as processor 930.

In a preferred embodiment of the present invention, the requests by a lower level agent include: read line (referred to as BRL), read invalidate line (referred to as BRIL), invalidate line (referred to as BIL), and write line (referred to as BWL). Each of these requests is briefly discussed in general below.

A BRL request (read line) is a request by a lower level agent, for example processor 930A, to gain read ownership to a particular data line 915. Processor 930A issues the BRL request when it only wishes to obtain a value of a variable in the particular data line 915. Processor 930A places the BRL request on bus 940A. Other agents connected to bus 940A (i.e., processor 930B and TLC 920) "snoop" bus 940A and respond to requests according to the well known MESI protocol. If a "snoop hit modified" occurs (shown in Table VIII as "HIT=YES") as a result of the BRL request, processor 930A receives shared ownership of the modified data from processor 930B. Otherwise, if a "snoop hit modified" does not occur (shown in Table VIII as "HIT= NO") TLC 920 operates with processors 930C and 930D or memory 910 to deliver the particular data line 915 to processor 930A with either shared or exclusive ownership.

A BRIL request (read invalidate line) is a request by a lower level agent, for example processor 930A, to gain exclusive ownership to a particular data line 915. Processor 930A issues the BRIL request when it wishes to potentially modify a value of a variable in the particular data line 915. Processor 930A places the BRIL request on bus 940A. Other agents connected to bus 940A (i.e., processor 930B and TLC 920) snoop bus 940A and respond to the request. If a "snoop hit modified" occurs as a result of the BRIL request, processor 930A receives exclusive ownership of the modified data from processor 930B. Processor 930B relinquishes ownership by invalidating its copy of data line 915. If a "snoop hit modified" does not occur, TLC 920 operates with processors 930C and 930D or memory 910 to deliver the particular data line 915 to processor 930A with exclusive ownership. In order to maintain coherency, all other agents must relinquish ownership by invalidating their copies of the particular data line 915.

A BIL request (invalidate line) is a request by a lower level agent, for example processor 930A, that already has read ownership to a particular data line 915 and is seeking write ownership of the particular data line 915. Processor 930A places the BIL request on bus 940A. Other agents connected to bus 940A (i.e., processor 930B and TLC 920) snoop bus 940A and respond to the request. A snoop hit modified cannot occur. TLC 920 operates with processors 930C and 930D or memory 910 to provide exclusive ownership of data line 915 to processor 930A. In order to maintain coherency, all other agents must relinquish ownership by invalidating any copies of the particular data line 915 within their respective caches.

A BWL request (write line) is a request by a lower level agent, for example processor 930A, to write, or update, a particular data line 915. Processor 930A places the BWL request on 940A. TLC 920 operates to update the particular data line 915 in TLC 920, and processor 930A relinquishes ownership of the particular data line 915.

**TABLE VIII -**

| **TLC STATE TRANSITIONS DUE TO PROCESSOR REQUESTS** | | | | | | |
|---|---|---|---|---|---|---|
| TLC STATE | PROCESSOR REQUESTS | | | | | |
| | BRL HITM=NO | BRIL HITM=NO | BRL HITM=YES | BRIL HITM=YES | BIL | BWL |
| EME | EMS/EME | EME | EMS | EME | X | EMS |
| ENE | SCS/ECS | ENE | EMS | EME | X | EMS |
| EMS | EMS | EME | X | X | EME | EMS |
| ECS | ECS | ENE | X | X | ENE | EMS |
| SCS | SCS | ENE | X | X | ENE | EMS |
| UNU | SCS/ECS | ENE | EMS | EME | ENE | EMS |
| MISS | SCS/ECS | ENE | EMS | EME | ENE | EMS |

Table IX shows the state transitions for TLC 920 in response to a request by memory 910. In a preferred embodiment of the present invention, the requests by a memory 910 include: return and keep copy, return and purge, and purge. Each of these requests is discussed generally below.

A return and keep copy request is a request by memory 910 for TLC 920 to "return" exclusive ownership of a particular data line 915 and "keep" shared ownership of the particular data line 915. In essence, this request is a request for TLC 920 to change from exclusive ownership to shared ownership. The return of the particular data line 915 is necessary in the event that TLC 920 or one of its coherency domains 950 modified the particular data line 915. This request by memory 910 is in response to an agent of memory 910 other than TLC 920 requesting shared ownership of the particular data line 915.

A return and purge request is a request by memory 910 for TLC 920 to "return" exclusive ownership of a particular data line 915 and "purge" any copies of the particular data line 915. In essence, this request is a request for TLC 920 to relinquish all ownership of the particular data line 915. The return of the particular data line 915 is necessary in the event that TLC 920 or one of its coherency domains 950 modified the particular data line 915. This request by memory 910 is in response to an agent of memory 910 other than TLC 920 requesting exclusive ownership of the particular data line 915.

A purge request is a request by memory 910 for TLC 920 to return shared ownership of a particular data line 915. Because TLC 920 does not have exclusive ownership, and hence had no rights to modify the particular data line 915, no copy of the particular data line 915 must be returned to memory 915. The request requires that any copies of the particular data line 915 be purged, or invalidated. This request by memory 910 is in response to an agent of memory 910 other than TLC 920 requesting exclusive ownership of the particular data line 915.

**TABLE IX -**

| **TLC STATE TRANSITIONS DUE TO MEMORY REQUESTS** | | | | |
|---|---|---|---|---|
| TLC STATE | MEMORY REQUESTS | | | |
| | RETURN KEEP COPY HITM=NO | RETURN KEEP COPY HITM=YES | RETURN PURGE | PURGE COPY |
| EME | SCS | SCS | UNU | UNU |
| ENE | UNU | SCS | UNU | X |
| EMS | SCS | X | UNU | X |
| ECS | SCS | X | UNU | X |
| SCS | X | X | UNU | UNU |
| UNU | UNU | SCS | UNU | UNU |
| MISS | I UNU I | SCS I | UNU | UNU |

### Consistency

In a preferred embodiment of the present invention, TLC 920 also maintains memory consistency for data line 915. Consistency refers to the set of allowable memory access ordering. In contrast to coherency, which is concerned with access to a particular data line 915, consistency is concerned with the ordering, or timing, of accesses to multiple data lines 915. Two types of consistency are sequential consistency and processor consistency.

Sequential consistency is the most restrictive form of memory consistency. Sequential consistency requires that all processors 930 observe the order of writes to multiple data lines 915 in the same order that they are performed by two or more processors 930.

Processor consistency is a weaker form of memory consistency than is sequential consistency. Processor consistency requires that all processors 930 observe writes to multiple data lines 915 in the same order that they are performed by a single processor 930. For example, assume two processors 930, referred to as P₁ and P₂, are operating (i.e., reading, writing, etc.) on two data lines 915 in memory 910 referred to herein as D₁ and D₂. P₁ writes a new value to D₁ and then writes a new value to D₂. To be consistent, if P₂ observes the new value of D₂, then P₂ must observe the new value of D₁.

A preferred embodiment of the present invention implements processor consistency. Processor consistency is automatically maintained in caches that employ MESI protocols such as cache 970. However, directory protocols in a highly parallel, multiple path system such as that of coherent system 900, do not automatically maintain consistency. In a preferred embodiment of the present invention, memory 910 and TLC 920 work together to implement a consistent memory by following two requirements: 1) processors 930 perform write operations in program order; and 2) if write ownership for a particular data line 915 is acquired by a particular processor 930, then all processors 930 must acknowledge all pending returns of ownership of any data line 915 in their respective caches before the particular processor 930 can return a modified particular data line 915 to any agent other than ones connected to bus 940 of the particular processor 930.

In the example above, the only illegal set of operations is when P₂ observes the new value of D₂ and an old, or stale, value of D₁. All other sets of operations are legal because they can occur as a result of legitimate interleaving of operations by P₁ and P₂. The first requirement ensures that P₁ writes the new value of D₁ before it writes the new value of D₂. The second requirement ensures that both P₁ and P₂ remove the stale value of D₁ before being permitted to recognize the new value of D₂.

### Non-Inclusive Caches

Non-inclusive caches are those caches that do not necessarily include a copy of each cache line that exists within its coherency domains. In other words, each cache in the coherency domain need not be a subset of the associated higher level cache. In a preferred embodiment of the present invention, TLC 920 is a non-inclusive cache. In this embodiment, there may exist a cache line 975 in cache 970 in one or more of the processors 930 that corresponds to a particular data line 915 even though there is not a TLC cache line 925 that corresponds to the particular data line 915.

The advantages of TLC 920 being a non-inclusive cache include improved performance and a simple algorithm for replacing TLC cache lines 925 with new ones. If TLC 920 was a inclusive cache, replacing TLC cache lines 925 could cause purge or returns to be issued to lower level caches, thereby evicting frequently used data lines 915 and degrading performance. For example, suppose a processor 930 is coherency domain 950 is frequently using a cache line 975 corresponding to TLC cache line 925. At some point in time, TLC 920 may need to empty TLC cache line 925 to make room for new TLC cache lines 925. In a non-inclusive implementation, TLC 920 might use a least recently used replacement algorithm to "empty" old TLC cache lines 925 with no impact on lower level caches. The non-inclusive design allows frequently used cache line 975 in coherency domain 950 to remain intact even though the corresponding TLC cache line 925 is emptied from TLC 920. However. in an inclusive design, the frequently used cache line 975 in coherency domain 950 would also have to be emptied. This would likely result in decreased performance, because a subsequent request for this frequently used cache line 975 would miss in both processor 930 and TLC 920.

In the present invention, TLC 920 is a non-inclusive cache. The present invention utilizes the fact that memory 910 maintains its own directory and status for each data line 915. This, in part, allows TLC 920 to empty old TLC cache lines 925 regardless of whether a processor 930 is using a corresponding cache line 975. The present invention empties the old TLC cache line 925 and allows processor 930 to continue to use the corresponding cache line 975.

When memory 910 requests the return of a data line 915 for which TLC 920 does not have a corresponding TLC cache line 925, TLC 920 assumes that memory 910 is correct. Memory 910 recognizes to which TLC 920 it granted ownership via state 744 and vector 748. TLC 920 recognizes subsequent grants of ownership by TLC 920 to processors 930 via state 754 and vector 758. However, memory 910 does not recognize the subsequent grant of ownership to processors 930; only TLC 920 does.

Thus, when memory 910 requests the return of a data line 915 corresponding to a old, or invalid, TLC cache line 925, TLC 920 must request that each of its coherency domains 950 return a cache line 975 corresponding to data line 915 if one so exists (i.e., processors 930 in coherency domains 950 may have also emptied cache line 975). Each coherency domain 950 that has a copy of data line 915 returns it to TLC 920 who subsequently returns the copy to memory 910.

If a corresponding TLC cache line 925 exists in TLC cache 920, TLC 920 recognizes to which of coherency domains 950 TLC 920 has granted ownership of TLC cache line 925. In this case, TLC 920 merely requests that these coherency domains 950 return their respective cache lines 975. If a corresponding TLC cache line 925 does not exist in TLC cache 920, TLC 920 must request the return of TLC cache line 925 from each coherency domain 950 to make sure that all corresponding cache lines 975 are returned.

While various embodiments of the present invention have been described above, it should be understood that they have been presented by way of example only, and not limitation. Thus, the breadth and scope of the present invention should not be limited by any of the above-described exemplary embodiments, but should be defined only in accordance with the following claims and their equivalents.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A memory hierarchy system (900) comprising:
a main memory (910) having a plurality of data lines (915), the main memory (910) having a directory (915, 740) for maintaining information (744, 748) about the data lines (915);
at least one higher level cache (920) interfaced to the main memory (910), the at least one higher level cache (920) having one or more cache lines (925), each cache line (925) for storing information (754, 758) associated with one of the data lines (915); and
at least one lower level cache (970) within at least one coherency domain (950), the at least one lower level cache (970) being interfaced to and associated with the at least one higher level cache (920),
wherein the main memory (910) maintains coherence of the data lines (915) with the at least one higher level cache (920) using the directory (915, 740),
**characterized in that** the at least one higher level cache (920) is non-inclusive of the at least one lower level cache (970) comprised within the at least one coherency domain (950); and **in that**
the at least one higher level cache (920) maintains coherence of the cache lines (925) with the at least one lower level cache (970) comprised within the at least one coherency domain (950).

2. The memory hierarchy system of claim 1, wherein each of the cache lines (925) stores a copy of its associated data line (915).

3. The memory hierarchy system of claim 1, wherein each of the coherency domains (950) comprises at least two processors (930) associated with the at least one higher level cache (920) and coupled to the at least one lower level cache (970).

4. The memory hierarchy system of claim 3, wherein the at least one higher level cache (920) includes means for maintaining coherence with the at least one lower level cache (970).

5. The memory hierarchy system of claim 1, wherein the directory (915, 740) maintains information (744, 748) including ownership information with respect to the plurality of data lines (915), the system further comprising:
a plurality of higher level caches, each including a third level cache (920) interfaced to the main memory (910), each of the plurality of third level caches (920) operating independently from one another, each of the plurality of third level caches (920) having the one or more cache lines (925),
a plurality of lower level caches, each including a respective first level cache (970) and a respective second level cache (970),
wherein each of the plurality of third level caches (920) is associated with a plurality of processors (930), each of the plurality of processors (930) being coupled to a first level cache (970) and to a second level cache (970),
wherein each of the plurality of third level caches (920) is non-inclusive of the first and second level caches (970) coupled to its associated plurality of processors (930),
wherein the main memory (910) maintains coherence of data (915) among the plurality of third level caches (920) using the ownership information (744, 748) in the directory (915, 740), and
wherein each of the plurality of third level caches (920) maintains coherence of the cache lines (925) among the first and second level caches (970).

6. The memory hierarchy system of claim 5, wherein each of the plurality of third level caches (920) is a coherency cache.

7. The memory hierarchy system of claim 6, wherein each of the plurality of third level caches (920) is a data cache.

8. The memory hierarchy system of claim 5, wherein each of the plurality of third level caches (920) is coupled to its associated plurality of processors via a data bus.

9. The memory hierarchy system of claim 5, wherein each of the plurality of third level caches (920) is coupled to its associated plurality of processors (930) via a data bus shared with at least one other of the plurality of processors (930).

10. The memory hierarchy system of claim 9, wherein the second level caches (970) coupled to the plurality of processors (930) that share the data bus maintain coherence among themselves.

11. The memory hierarchy system of claim 10, wherein the second level caches (970) coupled to the plurality of processors (930) that share the data bus maintain coherence among themselves using a MESI protocol.

12. The memory hierarchy system of claim 10, wherein each of the plurality of third level caches (920) is coupled to two shared data buses, each of the shared data buses being coupled to a pair of the plurality of processors (930).

13. The memory hierarchy system of claim 12, wherein each first level cache (970) is included internally in the one of the plurality of processors (930) to which it is coupled.

14. The memory hierarchy system of claim 13, wherein each second level cache (970) is included internally in the one of the plurality of processors (930) to which it is coupled.

15. The memory hierarchy system of claim 6, wherein each of the plurality of third level caches (920) maintains coherence using a directory-based protocol.

## Patentansprüche

1. Ein Speicher-Hierarchie-System (900) das folgendes umfasst:
einen Hauptspeicher (910), der eine Vielzahl von Datenzeilen (915) hat, wobei der Hauptspeicher (910) ein Verzeichnis (915, 740) hat, zur Erhaltung von Information (744, 748) über die Datenzeilen (915);
mindestens einen Higher-Level-Cache (920), der mit dem Hauptspeicher (910) über eine Schnittstelle verbunden ist, wobei der mindestens eine Higher-Level-Cache (920) eine oder mehrere Cache-Zeilen (925) hat, wobei jede Cache-Zeile (925) Information (754, 758) speichert, die mit einer der Datenzeilen (915) verknüpft ist; und
mindestens einen Lower-Level-Cache (970) innerhalb mindestens einer Kohärenz-Domäne (950), wobei der mindestens eine Lower-Level-Cache (970) über eine Schnittstelle mit dem mindestens einen Higher-Level-Cache (920) verbunden ist und damit verknüpft ist,
worin der Hauptspeicher (910) die Kohärenz der Datenzeilen (915) mit dem mindestens einen Higher-Level-Cache (920) erhält, indem das Verzeichnis (915, 740) verwendet wird,
**dadurch gekennzeichnet, dass** der mindestens eine Higher-Level-Cache (920) den mindestens einen Lower-Level-Cache (970) nicht einschließt, der innerhalb der mindestens einen Kohärenz-Domäne (950) enthalten ist; und dadurch, dass
der mindestens eine Higher-Level-Cache (920) die Kohärenz der Cache-Zeilen (925) mit den mindestens einen Lower-Level-Cache (970) erhält, der innerhalb der mindestens einen Kohärenz-Domäne (950) enthalten ist.

2. Das Speicher-Hierarchie-System gemäß Anspruch 1, worin jede der Cache-Zeilen (925) eine Kopie ihrer verknüpften Datenzeile (915) speichert.

3. Das Speicher-Hierarchie-System gemäß Anspruch 1, worin jede der Kohärenz-Domänen (950) mindestens zwei Prozessoren (930) umfasst, die mit dem mindestens einen Higher-Level-Cache (920) verknüpft sind und die mit dem mindestens einen Lower-Level-Cache (970) gekoppelt sind.

4. Das Speicher-Hierarchie-System gemäß Anspruch 3, worin der mindestens eine Higher-Level-Cache (920) ein Mittel ein-schließt, um die Kohärenz mit dem mindestens einen Lower-Level-Cache (970) zu erhalten.

5. Das Speicher-Hierarchie-System gemäß Anspruch 1, worin das Verzeichnis (915, 740) Information (744., 748) erhält, die Inhaberschaft-Information in Bezug auf die Vielzahl von Datenzeilen (915) einschließt, wobei das System weiterhin folgendes umfasst:
eine Vielzahl von Higher-Level-Caches, wobei jeder einen Third-Level-Cache (920) einschließt, der mit dem Hauptspeicher (910) über eine Schnittstelle verbunden ist, wobei jeder der Vielzahl von Third-Level-Caches (920) unabhängig voneinander arbeitet, wobei jeder der Vielzahl von Third-Level-Caches (920) eine oder mehrere Cache-Zeilen (925) hat,
eine Vielzahl von Lower-Level-Caches, wobei jeder einen jeweiligen First-Level-Cache (970) und einen jeweiligen Second-Level-Cache (970) einschließt,
worin jeder der Vielzahl von Third-Level-Caches (920) mit einer Vielzahl von Prozessoren (930) verknüpft ist, wobei jeder der Vielzahl von Prozessoren (930) mit einem First-Level-Cache (970) und einen Second-Level-Cache (970) gekoppelt ist,
worin jeder der Vielzahl von Third-Level-Caches (920) die First- und Second-Level-Caches (970), die mit ihrer verknüpften Vielzahl von Prozessoren (930) gekoppelt sind, nicht einschließt,
worin der Hauptspeicher (910) die Kohärenz von Daten (915) zwischen der Vielzahl von Third-Level-Caches (920) erhält, indem die Inhaberschaft-Information (744, 748) im Verzeichnis (915, 740) verwendet wird, und
worin jeder der Vielzahl von Third-Level-Caches (920) die Kohärenz der Cache-Zeilen (925) zwischen den First- und Second-Level-Caches (970) erhält.

6. Das Speicher-Hierarchie-System gemäß Anspruch 5, worin jeder der Vielzahl von Third-Level-Caches (920) ein Kohärenz-Cache ist.

7. Das Speicher-Hierarchie-System gemäß Anspruch 6, worin jeder der Vielzahl von Third-Level-Caches (920) ein Daten-Cache ist.

8. Das Speicher-Hierarchie-System gemäß Anspruch 5, worin jeder der Vielzahl von Third-Level-Caches (920) mit seiner verknüpften Vielzahl von Prozessoren über einen Datenbus gekoppelt ist.

9. Das Speicher-Hierarchie-System gemäß Anspruch 5, worin jeder der Vielzahl von Third-Level-Caches (920) mit seiner verknüpften Vielzahl von Prozessoren (930) über einen Datenbus gekoppelt ist, der mit mindestens einem anderen der Vielzahl von Prozessoren (930) geteilt wird.

10. Das Speicher-Hierarchie-System gemäß Anspruch 9, worin die Second-Level-Caches (970), die mit der Vielzahl von Prozessoren (930) gekoppelt sind, die den Datenbus teilen, die Kohärenz untereinander erhalten.

11. Das Speicher-Hierarchie-System gemäß Anspruch 10, worin die Second-Level-Caches (970), die mit der Vielzahl von Prozessoren (930) gekoppelt sind, die den Datenbus teilen, die Kohärenz untereinander erhalten, indem ein MESI-Protokoll verwendet wird.

12. Das Speicher-Hierarchie-System gemäß Anspruch 10, worin jeder der Vielzahl von Third-Level-Caches (920) mit zwei geteilten Datenbussen gekoppelt ist, wobei jeder der geteilten Datenbusse mit einem Paar der Vielzahl von Prozessoren (930) gekoppelt ist.

13. Das Speicher-Hierarchie-System gemäß Anspruch 12, worin jeder First-Level-Cache (970) intern in dem einen der Vielzahl von Prozessoren (930) eingeschlossen ist, mit dem er gekoppelt ist.

14. Das Speicher-Hierarchie-System gemäß Anspruch 13, worin jeder Second-Level-Cache (970) intern in dem einen der Vielzahl von Prozessoren (930) eingeschlossen ist, mit dem er gekoppelt ist.

15. Das Speicher-Hierarchie-System gemäß Anspruch 6, worin jeder der Vielzahl von Third-Level-Caches (920) die Kohärenz erhält, indem ein Verzeichnis-basiertes Protokoll verwendet wird.

## Revendications

1. Un système à mémoire hiérarchique (900) comprenant :
une mémoire principale (910) comportant une pluralité de liges de donnée (915), la mémoire principale (910) ayant un répertoire (915, 740) pour conserver de l'information (744, 748) concernant les lignes de données (915) ;
au moins une antémémoire de niveau supérieur (920), interfacée avec la mémoire principale (910), la au moins une antémémoire de niveau supérieur (920) ayant une ou plusieurs lignes d'antémémoire (925), chaque ligne d'antémémoire (925) étant prévue pour stocker de l'information (754, 758) associée à l'une des lignes de données (915) ; et
au moins une antémémoire de niveau inférieur (970) dans au moins un domaine de cohérence (950), la au moins une antémémoire de niveau inférieur (970) étant interfacée envers et associée à la au moins une antémémoire de niveau supérieur (920),
dans lequel la mémoire principale (910) conserve la cohérence des lignes de données (915) avec la au moins une antémémoire de niveau supérieur (920), en utilisant le répertoire (915, 740),
**caractérisé en ce que** la au moins une antémémoire de niveau supérieur (920) est en relation non inclusive envers la au moins une antémémoire de niveau inférieur (970) comprise dans le au moins un domaine de cohérence (950) ; et **en ce que**
la au moins une antémémoire de niveau supérieur (920) conserve la cohérence des lignes d'antémémoire (925) avec la au moins une antémémoire de niveau inférieur (970) comprise dans le au moins un domaine de cohérence (950).

2. Le système à mémoire hiérarchique selon la revendication 1, dans lequel chacune des lignes d'antémémoire (925) stocke une copie de sa ligne de données (915) associée.

3. Le système à mémoire hiérarchique selon la revendication 1, dans lequel chacun des domaines de cohérence (950) comprend au moins deux processeurs (930) associés à la au moins une antémémoire de niveau supérieur (920) et couplés à la au moins une antémémoire de niveau inférieur (970).

4. Le système à mémoire hiérarchique selon la revendication 3, dans lequel la au moins une antémémoire de niveau supérieur (920) comprend des moyens pour maintenir la cohérence avec la au moins une antémémoire de niveau inférieur (970).

5. Le système à mémoire hiérarchique selon la revendication 1, dans lequel le répertoire (915, 740) conserve de l'information (744, 748) incluant une information de propriété au sujet de la pluralité des lignes de données (915), le système comprenant en outre :
une pluralité d'antémémoires de niveau supérieur, chacune comprenant une antémémoire de niveau trois (920), interfacée envers la mémoire principale (910), chacune de la pluralité des antémémoires de niveau trois (920) fonctionnant indépendamment l'une de l'autre, chacune de la pluralité des antémémoires de niveau trois (920) ayant les unes ou plusieurs lignes d'antémémoires (925),
une pluralité d'antémémoires à niveau inférieur, comprenant chacune une antémémoire de niveau un (970) respective et une antémémoire de niveau deux (970) respective,
dans lequel chacune de la pluralité des antémémoires de niveau trois (920) est associée à une pluralité de processeurs (930), chacun de la pluralité des processeurs (930) est couplé à une antémémoire de niveau un (970) et à une. antémémoire de niveau deux (970),
dans lequel chacune de la pluralité des antémémoires de niveau trois (920) est en relation non inclusive envers les antémémoires de niveau un et deux (970), couplé à sa pluralité associé de processeurs (930),
dans lequel la mémoire principale (910) maintient la cohérence des données (915) parmi la pluralité des antémémoires de niveau trois (920), par utilisation de l'information de propriété (744, 748) dans le répertoire (915, 740), et
dans lequel chacune de la pluralité des antémémoires de niveau trois (920) conserve la cohérence des lignes d'antémémoires (923) parmi les antémémoires de niveau un et de niveau deux (970).

6. Le système à mémoire hiérarchique selon la revendication 5,dans lequel chacune de la pluralité des antémémoires de niveau trois (920) est une antémémoire de cohérence.

7. Le système à mémoire hiérarchique selon la revendication 6, dans lequel chacune de la pluralité des antémémoires de niveau trois (920) est une antémémoire de données.

8. Le système à mémoire hiérarchique selon la revendication 5, dans lequel chacune de la pluralité des antémémoires de niveau trois (920) est couplée à sa pluralité associée de processeurs, via un bus de données.

9. Le système à mémoire hiérarchique selon la revendication 5, dans lequel chacune de la pluralité des antémémoires de niveau trois (920) est couplée à sa pluralité associée de processeurs (930), via un bus de données partagé avec au moins un autre de la pluralité de processeurs (930).

10. Le système à mémoire hiérarchique selon la revendication 9, dans lequel les antémémoires de niveau deux (970), couplées à la pluralité de processeurs (930) qui partagent le bus de données, conservent, la cohérence parmi elles-mêmes.

11. Le système à mémoire hiérarchique selon la revendication 10, dans lequel les antémémoires de niveau deux (970), couplées à la pluralité de processeurs (930) qui partagent le bus de données, maintiennent la cohérence avec elles-mêmes en utilisant un protocole MESI.

12. Le système à mémoire hiérarchique selon la revendication 10, dans lequel chacune de la pluralité des antémémoires de niveau trois (920) est couplée à deux bus de données partagés, chacun des bus de données partagés étant couplé à une paire de la pluralité de processeurs (930).

13. Le système' à mémoire hiérarchique selon la revendication 12, dans lequel chaque antémémoire de niveau un (970) est incluse en interne dans l'un de la pluralité de processeurs (930) auquel elle est couplée.

14. Le système à mémoire hiérarchique selon la revendication 13, dans lequel chaque antémémoire de niveau deux (970) est incluse en interne dans l'un de la pluralité des processeurs (930) auquel elle est couplée.

15. Le système à mémoire hiérarchique selon la revendication 6,dans lequel chacune de la pluralité des antémémoires de niveau trois (920) maintient la cohérence en utilisant un protocole à base de répertoire.
